# EUROPÄISCHE PATENTANMELDUNG

(11) **EP 4 748 754 A1**
(43) Veröffentlichungstag der Anmeldung: **27.05.2026**
(21) Anmeldenummer: 25217357.0
(22) Anmeldetag: 20.11.2025
(51) Int. Cl.: B65G 33/02

(54) **TRANSPORTVORRICHTUNG UND VORRICHTUNG ZUM BEHANDELN VON BEHÄLTERN**

(30) Priorität: 20.11.2024 DE 102024134142
(71) Anmelder: Krones AG, 93073 Neutraubling (DE)
(72) Erfinder: Ehrismann, Tobias, 93073 Neutraubling (DE)
(74) Vertreter: Nordmeyer, Philipp Werner

(57) **Zusammenfassung**

Transportvorrichtung (10) zum Transportieren von Behältern (100) entlang eines Förderwegs (F), vorzugsweise in einer Getränkeabfüllanlage, wobei die Transportvorrichtung (10) aufweist: zumindest eine Transportschnecke (20, 20a, 20b), die entlang des Förderwegs (F) gekrümmt ist, vorzugsweise kreisförmig oder kreissegmentförmig gekrümmt, ferner um eine Rotationsachse (R) um sich selbst rotierbar und entlang des Förderwegs (F) stationär ist; wobei die zumindest eine Transportschnecke (20, 20a, 20b) mehrere Taschen (25) ausbildet, die eingerichtet sind, um je einen Behälter (100) zumindest teilweise so aufzunehmen und/oder zu stützen, dass durch Drehung der Transportschnecke (10) um die Rotationsachse (R) ein Transport der Behälter (100) entlang des Förderwegs (F) erfolgt.

## Beschreibung

### Technisches Gebiet

Die vorliegende Erfindung betrifft eine Transportvorrichtung zum Transportieren von Behältern entlang eines Förderwegs sowie eine Vorrichtung zum Behandeln von Behältern mit einer solchen Transportvorrichtung, insbesondere in einer Getränkeabfüllanlage.

### Stand der Technik

Auf dem Gebiet der Getränkeabfüllanlagen ist bekannt, Behälter während der Behandlung, umfassend etwa das Befüllen und Verschließen der Behälter, über einen Sterntransport durch die Anlage zu befördern. Dabei werden die Behälter mittels rotierender Transportsterne (Neckhandling oder Transportsterne mit Bauchführung) am tangentialen Berührungspunkt von einem Transportstern auf einen gegenläufig drehenden nächsten Transportstern übergeben und so entlang eines Förderwegs transportiert. Ein solcher Transportstern geht beispielsweise aus der DE 10 2008 010 894 A1 hervor.

Es ist ferner bekannt, Behälter entlang linearer Trajektorien mittels eines Schneckensystems entweder alleinstehend oder in Kombination mit anderen Transportsystemen zu transportieren, vgl. beispielsweise DE 10 2020 111 119 A1 und EP 2 489 614 A1.

In bestimmten Anlagen oder Anlagenbereichen sind rotierende Fördereinrichtungen wie etwa Transportsterne nachteilig, beispielsweise im Auslaufbereich eines Isolators in aseptischen Anwendungen. In diesem Fall durchdringen Abschnitte des Transportsterns, insbesondere Taschen oder Klammern zur Aufnahme der Behälter, aufgrund der Rotation entlang des Förderwegs immer wieder die Grenze zwischen einem Reinraum und der äußeren Umgebung oder einem Grauraumbereich, wodurch potentiell verunreinigte Maschinenteile wieder in den Reinraum hineingedreht werden.

### Darstellung der Erfindung

Eine Aufgabe der Erfindung besteht darin, eine verbesserte Transportvorrichtung zum Transportieren von Behältern entlang eines Förderwegs sowie eine verbesserte Vorrichtung zum Behandeln von Behältern mit einer solchen Transportvorrichtung, insbesondere in einer Getränkeabfüllanlage, bereitzustellen.

Die Aufgabe wird durch eine Transportvorrichtung mit den Merkmalen des Anspruchs 1 sowie eine Vorrichtung zum Behandeln von Behältern mit den Merkmalen des Anspruchs 9 gelöst. Vorteilhafte Weiterbildungen folgen aus den Unteransprüchen, der folgenden Darstellung der Erfindung sowie der Beschreibung bevorzugter Ausführungsbeispiele.

Die Transportvorrichtung sowie die Vorrichtung zum Behandeln von Behältern kommen besonders bevorzugt in einer Getränkeabfüllanlage zur Anwendung, beispielsweise zur Abfüllung von Wasser (still oder karbonisiert), Softdrinks, Smoothies, Säften, Bier, Wein, Milchprodukten, Mischgetränken und dergleichen. Die Behandlung der Behälter kann das Befüllen und/oder Verschließen und/oder andere Behandlungsprozesse (Streckblasen, Reinigen, Desinfizieren, Etikettieren, Prüfen usw.) umfassen, wobei es hierin in erster Linie um den Transport der Behälter geht. Die Behälter können Flaschen, etwa aus Glas oder PET, Dosen oder andere geeignete Behältnisse zur Aufnahme und Lagerung von Flüssigkeiten, insbesondere Getränken, sein.

Die Transportvorrichtung umfasst zumindest eine Transportschnecke, die entlang eines Förderwegs gekrümmt ist, vorzugsweise kreisförmig oder kreissegmentförmig gekrümmt, um eine Rotationsachse um sich selbst rotierbar und entlang des Förderwegs stationär ist. In anderen Worten, die Rotationsachse verläuft im Innern der Transportschnecke entlang deren Haupterstreckungsrichtung, und die Transportschnecke rotiert nur um sich selbst und ist im Übrigen entlang des Förderwegs stationär.

Die zumindest eine Transportschnecke weist (entlang des Förderwegs gesehen) mehrere Taschen auf beziehungsweise bildet solche aus, die eingerichtet sind, um je einen Behälter zumindest teilweise so aufzunehmen und/oder zu stützen, dass durch Drehung der Transportschnecke um die Rotationsachse ein Transport der Behälter entlang des Förderwegs erfolgt. Die Taschen können zu diesem Zweck durch eine oder mehrere spiralförmige Vertiefungen in der Transportschnecke ausgebildet sein.

Durch die Anwendung einer oder mehrerer Transportschnecken, die um sich selbst rotieren, sich jedoch nicht entlang des Förderwegs bewegen, kann eine besonders gute Trennung zwischen Räumen verschiedener Reinheitsstufen erfolgen, da jeder Abschnitt der Transportschnecke(n) während des gesamten Transportprozesses in seinem Bereich verbleibt und lediglich der Behälter die Raumgrenze(n) durchbricht.

Darüber hinaus erhöht die Krümmung der Transportschnecke(n) die Kompatibilität der Transportvorrichtung mit Anlagen, die beispielsweise herkömmliche Transportsterne und/oder Behandlungskarusselle verwenden, da die Transportschnecken den gleichen oder einen ähnlich gekrümmten beziehungsweise kreisförmigen Förderweg abbilden können. Herkömmliche Transportsterne können gegebenenfalls durch Transportschnecken ersetzt werden, ohne dass eine grundlegende Neukonzeption bestehender Anlagen erforderlich ist, wodurch bestehende Anlagen mit der hierin dargelegten Transportvorrichtung nachrüstbar sind.

Vorzugsweise ist die zumindest eine Transportschnecke segmentartig aufgebaut, umfassend mehrere entlang des Förderwegs miteinander verbundene Schneckensegmente, wodurch die Transportschnecke flexibel an unterschiedliche Förderwege, insbesondere Förderwege mit unterschiedlichen Radien, anpassbar ist. Die einzelnen Schneckensegmente können flexibel oder starr ausgebildet sein.

Die Verbindung der Schneckensegmente kann über Kardangelenke erfolgen. Alternativ oder zusätzlich können die Schneckensegmente über eine oder mehrere flexible Wellen miteinander verbunden sein.

Gemäß einer alternativen Ausführungsform kann die zumindest eine Transportschnecke einstückig bzw. als ein Körper gefertigt sein. Hierbei ist es möglich, dass diese als ein Element additiv gefertigt ist und entlang der Rotationsachse unterschiedliche Abschnitte mit abwechselnd festen Bereichen (Führungsflächen) und weichen Bereichen (Gelenke) aufweist. Dies würde einem zusammengesetzten Körper aus Segmenten und Gelenken entsprechen. Zu diesem Zweck kann ein nicht so flexibles Material wie TPU, PA12 oder ein ähnlicher Werkstoff angewendet werden.

Vorzugsweise weisen die Schneckensegmente stirnseitig einen oder mehrere Mitnehmer auf, die eine Drehmomentübertragung von einem Schneckensegment auf ein benachbartes Schneckensegment ermöglichen. Auf diese Weise können alle Schneckensegmente gleichzeitig angetrieben werden. Der eine oder die mehreren Mitnehmer können beispielsweise als Vorsprünge ausgebildet sein, die in entsprechende Ausnehmungen des benachbarten Schneckensegments eingreifen.

Die Transportschnecke beziehungsweise deren etwaige Schneckensegmente können via 3D-Druck gefertigt sein.

Die Transportschnecke kann prinzipiell auch einstückig ausgebildet sein, wobei sie in diesem Fall insgesamt aus einem flexiblen Werkstoff gefertigt ist, beispielsweise TPU.

Vorzugsweise umfasst die Transportvorrichtung zumindest eine innere Transportschnecke und eine äußere Transportschnecke, die jeweils entlang des Förderwegs gekrümmt sind, insbesondere kreisförmig oder kreissegmentförmig gekrümmt sind, ferner um je eine Rotationsachse um sich selbst rotierbar und entlang des Förderwegs stationär sind. Die Bezeichnungen "innere" und "äußere" sind hier relativ zur Krümmung des Förderwegs zu sehen. Die Taschen zur Aufnahme der Behälter sind hierbei durch Zusammenwirkung beider Transportschnecken derart realisiert, dass ein in einer Tasche aufgenommener Behälter beidseitig (in einer Radialrichtung relativ zum gekrümmten Förderweg gesehen) von entsprechend einer Transportschnecke gestützt wird.

Vorzugsweise ist der relative Rotationswinkel der inneren Transportschnecke und der äußeren Transportschnecke veränderbar, wodurch die Taschen auf unterschiedliche Behältergrößen einstellbar sind. Eine synchrone Einstellung der beiden Transportschnecken hat beispielsweise eine maximale Taschengröße zur Folge. Der relative Rotationswinkel der Transportschnecken ist in diesem Fall zur Aufnahme großer Behälter geeignet. Eine nicht-synchrone Einstellung der beiden Transportschnecken dient zur Aufnahme von kleinen beziehungsweise kleineren Behältern.

Die Einstellung des relativen Rotationswinkels der beiden Transportschnecken kann von einer Steuereinrichtung vorgenommen werden. Der Transport der Behälter entlang des Förderwegs erfolgt über eine synchrone Drehung der beiden Transportschnecken, d.h. unter Beibehaltung des relativen Rotationswinkels, vorzugsweise ebenfalls gesteuert oder geregelt von der Steuereinrichtung.

Vorzugsweise weist die Transportvorrichtung mehrere übereinander (senkrecht zur Transportebene gesehen) angeordnete Transportschnecken auf. Auf diese Weise kann eine höhere Stabilität der zu transportierenden Behälter erzielt werden. Hierbei können lediglich auf der äußeren Seite, lediglich auf der inneren Seite oder beidseitig zwei oder mehr Transportschnecken installiert sein.

Die oben genannte Aufgabe wird ferner durch eine Vorrichtung zum Behandeln von Behältern, vorzugsweise in einer Getränkeabfüllanlage, gelöst, wobei die Vorrichtung zumindest eine Transportvorrichtung nach einer der vorstehend dargelegten Ausführungsvarianten aufweist.

Die Vorrichtung umfasst besonders bevorzugt ferner einen Reinraum, insbesondere mit einer aseptischen Atmosphäre, und einen Außenraum. Der Außenraum kann die äußere Umgebung sein oder ein Grauraum, d.h. ein Schleusenbereich zwischen dem Reinraum und der äußeren Umgebung. Der Reinraum und der Außenraum sind über eine Reinraumgrenze, d.h. eine Wandung beispielsweise aus Blech, voneinander getrennt. Die Reinraumgrenze weist einen Ausschnitt auf, durch den die Behälter die Reinraumgrenze überschreiten. Die Transportvorrichtung ist in diesem Fall eingerichtet, um die Behälter durch den Ausschnitt vom Reinraum in den Außenraum oder umgekehrt vom Außenraum in den Reinraum zu transportieren.

Durch die Anwendung einer oder mehrerer Transportschnecken, die um sich selbst rotieren, sich jedoch nicht entlang des Förderwegs bewegen, kann eine besonders gute Trennung zwischen Reinraum und Außenraum erfolgen, da jeder Abschnitt der Transportschnecke(n) während des gesamten Transportprozesses in seinem Bereich (Reinraum oder Außenraum) verbleibt und lediglich der Behälter die Reinraumgrenze durchbricht.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Vorrichtung zum Behandeln von Behältern mit einer Transportvorrichtung, umfassend eine Transportschnecke;
- Figur 2a: ein beispielhaftes Schneckensegment der Transportschnecke;
- Figur 2b: eine Verbindung zweier Schneckensegmente;
- Figur 3: schematisch eine Vorrichtung zum Behandeln von Behältern mit einer Transportvorrichtung, umfassend mehrere Transportschnecken, gemäß einem weiteren Ausführungsbeispiel;
- Figuren 4a, 4b: eine Einstellbarkeit der Transportvorrichtung auf unterschiedliche Behälterdurchmesser; und
- Figur 5: schematisch eine Vorrichtung zum Behandeln von Behältern mit einer Transportvorrichtung, umfassend mehrere Transportschnecken, gemäß einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholte Beschreibung dieser Elemente wird teilweise verzichtet, um Redundanz zu vermeiden.

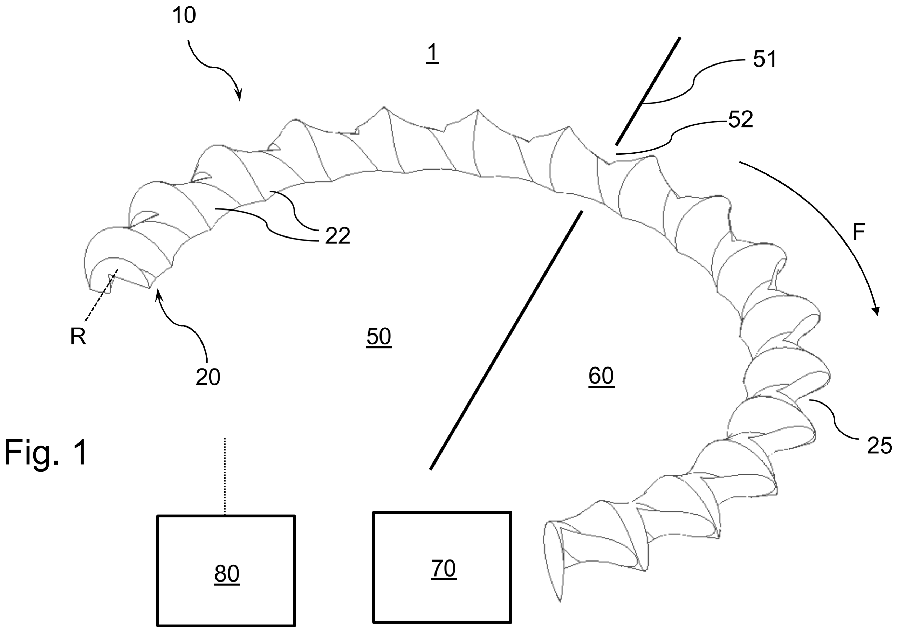

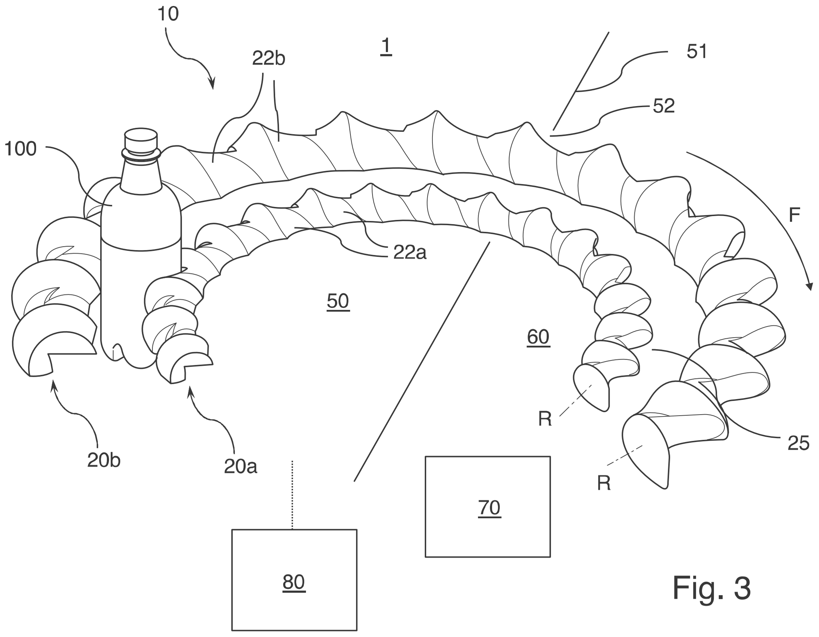

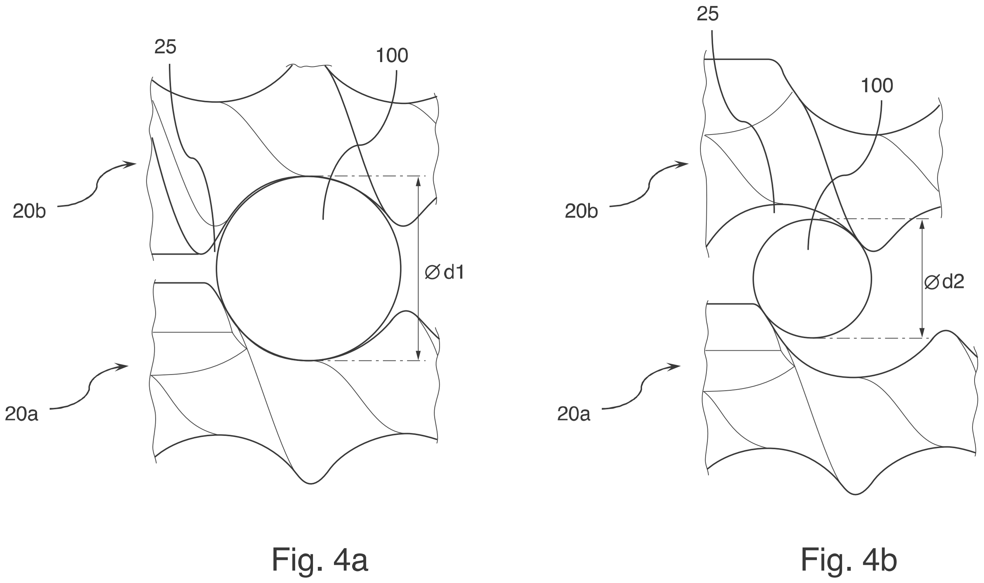

Die Figur 1 zeigt schematisch eine Vorrichtung 1 zum Behandeln von Behältern 100 (vgl. Figuren 3, 4a, 4b). Die Vorrichtung 1 kommt besonders bevorzugt in einer Getränkeabfüllanlage zur Anwendung, beispielsweise zur Abfüllung von Wasser (still oder karbonisiert), Softdrinks, Smoothies, Säften, Bier, Wein, Milchprodukten, Mischgetränken und dergleichen. Die Behandlung der Behälter 100 kann das Befüllen und/oder Verschließen und/oder andere Behandlungsprozesse (Streckblasen, Reinigen, Desinfizieren, Etikettieren, Prüfen usw.) derselben umfassen, wobei es hierin in erster Linie um den Transport der Behälter 100 in der Vorrichtung 1, etwa zwischen verschiedenen Behandlungsstationen, geht.

Die Vorrichtung 1 weist eine Transportvorrichtung 10 auf, die eingerichtet ist, um die Behälter 100 entlang eines Förderwegs F zu transportieren. Der Förderweg F umfasst eine gekrümmte, insbesondere kreisförmige beziehungsweise kreissegmentförmige Trajektorie.

Die Vorrichtung 1 umfasst einen Reinraum 50, auch als "Isolator" bezeichnet, und einen Außenraum 60, der eine äußere Umgebung oder ein Grauraum, d.h. ein Schleusenbereich zwischen dem Reinraum 50 und der äußeren Umgebung, sein kann. Im Reinraum 50 liegt eine aseptische Atmosphäre vor, die durch entsprechende technische Mittel (beispielsweise Lüftungssystem, Überdruck usw.) erzeugt und aufrechterhalten wird. Der Reinraum 50 und der Außenraum 60 sind über eine Reinraumgrenze 51, d.h. eine Wandung beispielsweise aus Blech, voneinander getrennt.

Die Transportvorrichtung 10 ist eingerichtet, um die Behälter 100 durch die Reinraumgrenze 51 vom Reinraum 50 in den Außenraum 60 oder umgekehrt vom Außenraum 60 in den Reinraum 50 zu transportieren. Zu diesem Zweck weist die Reinraumgrenze 51 einen Ausschnitt 52 auf, durch den die Behälter 100 die Reinraumgrenze 51 überschreiten.

Die Transportvorrichtung 10 weist zumindest eine Transportschnecke 20 auf, die dem Förderweg F entsprechend gekrümmt ist, d.h. eine Haupterstreckungsrichtung der Transportschnecke 20 folgt dem Förderweg F, und ferner um eine Rotationsachse R drehbar ist. Die Rotationsachse R verläuft im Innern der Transportschnecke 20 entlang deren Haupterstreckungsrichtung. In anderen Worten, die Transportschnecke rotiert nur um sich selbst und ist im Übrigen entlang des Förderwegs F stationär.

Die Drehung der Transportschnecke 20 erfolgt über einen entsprechenden Antrieb 70 und wird mittels einer Steuereinrichtung 80 gesteuert und/oder geregelt.

Die Transportschnecke 20 kann einstückig oder wie im vorliegenden Ausführungsbeispiel segmentartig, umfassend mehrere miteinander verbundene Schneckensegmente 22, aufgebaut sein.

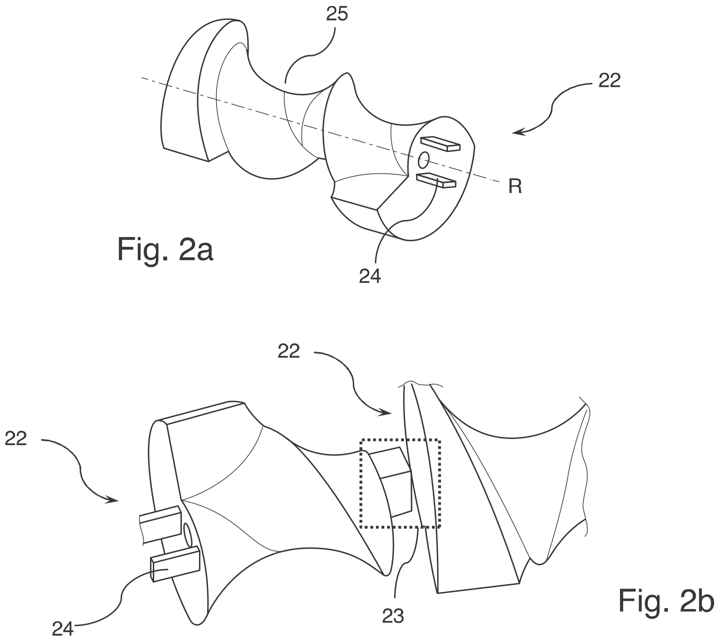

Die Figur 2a zeigt ein beispielhaftes Schneckensegment 22. Die einzelnen Schneckensegmente 22 können flexibel oder starr ausgebildet sein. Die Verbindung der Schneckensegmente 22 kann über Kardangelenke 23 erfolgen, vgl. Figur 2b. Alternativ können die Schneckensegmente 22 über eine oder mehrere flexible Wellen miteinander verbunden sein. Ist die Transportschnecke 20 einstückig ausgebildet, so ist diese insgesamt aus einem flexiblen Werkstoff gefertigt, beispielsweise TPU. Die Transportschnecke 20 beziehungsweise deren etwaige Schneckensegmente 22 können via 3D-Druck gefertigt sein.

Hierbei ist es möglich, dass die Transportschnecke 20 entlang der Rotationsachse unterschiedliche Abschnitte mit abwechselnd festen Bereichen (Führungsflächen) und weichen Bereichen (Gelenke) aufweist. Dies würde einem zusammengesetzten Körper aus Segmenten und Gelenken entsprechen.

Die einzelnen Schneckensegmente 22 können stirnseitig über einen oder mehrere Mitnehmer 24 verfügen, die eine Drehmomentübertragung von einem Schneckensegment 22 auf ein benachbartes Schneckensegment 22 ermöglichen, so dass alle Schneckensegmente 22 gleichzeitig antreibbar sind. Die Mitnehmer 24 können beispielsweise als Vorsprünge ausgebildet sein, die in entsprechende Ausnehmungen des benachbarten Schneckensegments 22 eingreifen.

Die Transportschnecke 20 weist entlang deren Haupterstreckungsrichtung, d.h. entlang des Förderwegs F, Taschen 25 auf, die eingerichtet sind, um je einen Behälter 100 (vgl. Figur 3) zumindest teilweise aufzunehmen und/oder so zu stützen, dass die Behälter 100 durch Drehung der Transportschnecke 20 um sich selbst entlang der Förderrichtung F transportierbar sind.

Haben die Behälter 100 eine übliche Flaschenform, so sind die Taschen 25 vorzugsweise ausgebildet, um je einen Flaschenbauch beziehungsweise Flaschenkörper aufzunehmen, d.h. teilweise zu umgeben oder zumindest ausreichend zu stützen. Im Ausführungsbeispiel der Figur 1 werden die Behälter 100 im Wesentlichen auf einer Seite von der Transportschnecke 20 erfasst, während die andere Seite beispielsweise durch eine stationäre Führung (nicht gezeigt) stabilisiert werden kann.

Die Taschen 25 sind durch eine oder mehrere spiralförmige Vertiefungen ausgebildet, so dass durch Drehung der Transportschnecke 20 um die Rotationsachse R, d.h. um sich selbst, ein Transport der Behälter 100 entlang des Förderwegs F erfolgt.

Die Figur 3 zeigt ein alternatives Ausführungsbeispiel, bei dem die Transportvorrichtung 10 zwei Transportschnecken umfasst, nämlich eine innere Transportschnecke 20a und eine äußere Transportschnecke 20b. Beide Transportschnecken 20a, 20b sind um je eine eigene Rotationsachse R rotierbar. Die Transportschnecken 20a, 20b können einstückig oder segmentartig mit Schneckensegmenten 22a, 22b aufgebaut sein, wie oben beschrieben. Die Taschen 25 zur Aufnahme der Behälter 100 werden hierbei durch eine Zusammenwirkung beider Transportschnecken 20a, 20b realisiert, d.h. die Behälter 100 werden beidseitig von entsprechend einer Transportschnecke 20a, 20b gestützt.

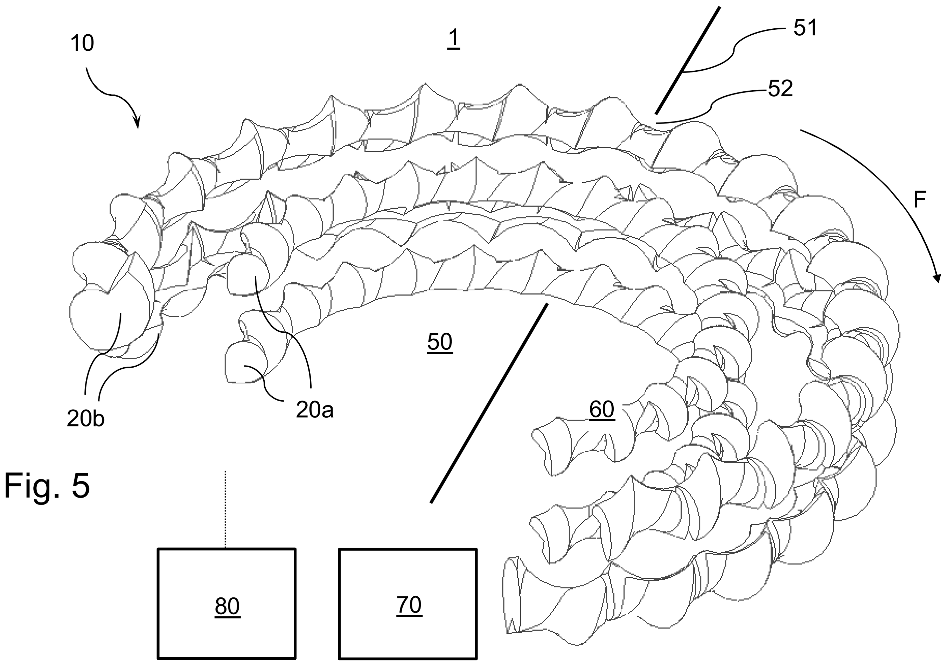

Das Ausführungsbeispiel der Figur 3 (ebenso Figur 5) erlaubt zusätzlich zum Transport der Behälter 100 eine Einstellung der Transportvorrichtung 10 auf unterschiedliche Behältergrößen beziehungsweise Behälterdurchmesser, indem der relative Rotationswinkel der Transportschnecken 20a, 20b verschoben beziehungsweise verändert wird.

Die Draufsicht der Figur 4a zeigt eine synchrone Einstellung der beiden Transportschnecken 20a, 20b, was eine maximale Taschengröße zur Folge hat. Der relative Rotationswinkel der Transportschnecken 20a, 20b ist in diesem Fall zur Aufnahme großer Behälter 100 beziehungsweise von Behältern 100 mit einem großen Durchmesser d1 geeignet. Die Figur 4b zeigt eine nicht-synchrone Einstellung der beiden Transportschnecken 20a, 20b zur Aufnahme von kleinen Behältern 100 beziehungsweise Behältern 100 mit einem kleineren Durchmesser d2.

Die Einstellung des relativen Rotationswinkels der beiden Transportschnecken 20a, 20b kann von der Steuereinrichtung 80 vorgenommen werden. Der Transport der Behälter 100 entlang des Förderwegs F erfolgt über eine synchrone Drehung der beiden Transportschnecken 20a, 20b, d.h. unter Beibehaltung des relativen Rotationswinkels, vorzugsweise ebenfalls gesteuert oder geregelt von der Steuereinrichtung 80. Der relative Rotationswinkel kann über den Antrieb 70 oder über eine separate Positionierungsvorrichtung eingestellt werden.

Die Figur 5 zeigt ein weiteres Ausführungsbeispiel der Vorrichtung 1, deren Transportvorrichtung 10 zwei innere, übereinander angeordnete Transportschnecken 20a, 20a und zwei äußere, übereinander angeordnete Transportschnecken 20b, 20b umfasst. Auf diese Weise kann eine höhere Stabilität der zu transportierenden Behälter 100 erzielt werden. Alternativ ist es denkbar, dass lediglich auf der äußeren Seite oder lediglich auf der inneren Seite zwei oder mehr Transportschnecken 20a, 20b installiert sind, je nach Behälterform und Anwendung. Die einzelnen Transportschnecken 20a, 20b können so wie oben in Bezug auf das Ausführungsbeispiel der Figur 1 dargelegt aufgebaut sein.

Die Steuereinrichtung 80 ist mit den zu steuernden beziehungsweise zu regelnden und/oder auszulesenden Komponenten der Vorrichtung 1 signaltechnisch verbunden, somit insbesondere mit dem Antrieb 70. Die Kommunikation zwischen der Steuereinrichtung 80 und den zu steuernden beziehungsweise zu regelnden und/oder auszulesenden Komponenten kann drahtgebunden oder drahtlos, digital oder analog erfolgen. Die Steuereinrichtung 80 kann entsprechend Signale (Steuersignale, Daten usw.) empfangen und/oder senden, wobei sowohl ein Signaltransport in einer Richtung als auch in beiden Richtungen in diesem Zusammenhang unter den Begriff "Kommunikation" fällt. Die Steuereinrichtung 80 muss hierbei nicht unbedingt durch eine zentrale Recheneinrichtung oder elektronische Regelung realisiert sein, sondern es sind dezentrale und/oder mehrstufige Systeme, Regelungsnetzwerke, Cloud-Systeme und dergleichen umfasst. Die Steuereinrichtung 80 kann zudem integraler Bestandteil einer übergeordneten Anlagensteuerung sein oder mit einer solchen kommunizieren. Die Steuereinrichtung 80 kann auch mit Anlagensteuerungen unterer Ebenen, d.h. den entsprechenden Einrichtungen zugeordneten Steuerungen kommunizieren.

Durch die Anwendung einer oder mehrerer Transportschnecken 20, 20a, 20b, die um sich selbst rotieren, sich jedoch nicht entlang des Förderwegs F bewegen, kann eine besonders gute Trennung zwischen Reinraum 50 und Außenraum 60 erfolgen, da jeder Abschnitt der Transportschnecke(n) 20, 20a, 20b während des gesamten Transportprozesses in seinem Bereich (Reinraum 50 oder Außenraum 60) verbleibt und lediglich der Behälter 100 die Reinraumgrenze 51 durchbricht.

Darüber hinaus erhöht die Krümmung der Transportschnecke(n) 20, 20a, 20b die Kompatibilität der Transportvorrichtung 10 mit Anlagen, die beispielsweise herkömmliche Transportsterne und/oder Behandlungskarusselle verwenden, da die Transportschnecke(n) 20, 20a, 20b den gleichen oder einen ähnlich gekrümmten beziehungsweise kreisförmigen Förderweg F abbilden können. Herkömmliche Transportsterne können gegebenenfalls durch Transportschnecken 20, 20a, 20b ersetzt werden, ohne dass eine grundlegende Neukonzeption bestehender Anlagen erforderlich ist, wodurch bestehende Anlagen mit der hierin dargelegten Transportvorrichtung 10 nachrüstbar sind.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung zum Behandeln von Behältern
- 10: Transportvorrichtung
- 20: Transportschnecke
- 20a: Transportschnecke
- 20b: Transportschnecke
- 22: Schneckensegment
- 22a: Schneckensegment
- 22b: Schneckensegment
- 23: Kardangelenk
- 24: Mitnehmer
- 25: Tasche
- 50: Reinraum
- 51: Reinraumgrenze
- 52: Ausschnitt
- 60: Außenraum
- 70: Antrieb
- 80: Steuereinrichtung

- 100: Behälter

- F: Förderweg
- R: Rotationsachse

- d1: Großer Durchmesser
- d2: Kleiner Durchmesser

## Patentansprüche

1. Transportvorrichtung (10) zum Transportieren von Behältern (100) entlang eines Förderwegs (F), vorzugsweise in einer Getränkeabfüllanlage, wobei die Transportvorrichtung (10) aufweist:
zumindest eine Transportschnecke (20, 20a, 20b), die entlang des Förderwegs (F) gekrümmt ist, vorzugsweise kreisförmig oder kreissegmentförmig gekrümmt, ferner um eine Rotationsachse (R) um sich selbst rotierbar und entlang des Förderwegs (F) stationär ist; wobei
die zumindest eine Transportschnecke (20, 20a, 20b) mehrere Taschen (25) ausbildet, die eingerichtet sind, um je einen Behälter (100) zumindest teilweise so aufzunehmen und/oder zu stützen, dass durch Drehung der Transportschnecke (10) um die Rotationsachse (R) ein Transport der Behälter (100) entlang des Förderwegs (F) erfolgt.

2. Transportvorrichtung (10) nach Anspruch 1, **dadurch gekennzeichnet, dass** die zumindest eine Transportschnecke (20, 20a, 20b) segmentartig aufgebaut ist, umfassend mehrere entlang des Förderwegs (F) miteinander verbundene Schneckensegmente (22).

3. Transportvorrichtung (10) nach Anspruch 2, **dadurch gekennzeichnet, dass** die Schneckensegmente (22) über Kardangelenke (23) und/oder über eine oder mehrere flexible Wellen miteinander verbunden sind.

4. Transportvorrichtung (10) nach Anspruch 2 oder 3, **dadurch gekennzeichnet, dass** die Schneckensegmente (22) stirnseitig einen oder mehrere Mitnehmer (24) aufweisen, die eine Drehmomentübertragung von einem Schneckensegment (22) auf ein benachbartes Schneckensegment (22) ermöglichen, wobei die Mitnehmer (22) vorzugsweise als Vorsprünge ausgebildet sind, die in entsprechende Ausnehmungen des benachbarten Schneckensegments (22) eingreifen.

5. Transportvorrichtung (10) nach Anspruch 1, **dadurch gekennzeichnet, dass** die zumindest eine Transportschnecke (20, 20a, 20b) einstückig ausgebildet ist, wobei diese entlang der Rotationsachse (R) vorzugsweise unterschiedliche Abschnitte mit abwechselnd festen Bereichen und weichen Bereichen, welche als Gelenke fungieren, aufweist.

6. Transportvorrichtung (10) nach einem der vorigen Ansprüche, **dadurch gekennzeichnet, dass** die Transportvorrichtung (10) zumindest eine innere Transportschnecke (20a) und zumindest eine äußere Transportschnecke (20b) aufweist, die jeweils entlang des Förderwegs (F) gekrümmt sind, vorzugsweise kreisförmig oder kreissegmentförmig gekrümmt, ferner um je eine Rotationsachse (R) um sich selbst rotierbar und entlang des Förderwegs (F) stationär sind, wobei die Taschen (25) durch Zusammenwirkung beider Transportschnecken (20a, 20b) derart realisiert sind, dass ein in einer Tasche (25) aufgenommener Behälter (100) beidseitig von entsprechend einer Transportschnecke (20a, 20b) gestützt wird.

7. Transportvorrichtung (10) nach Anspruch 6, **dadurch gekennzeichnet, dass** der relative Rotationswinkel der inneren Transportschnecke (20a) und der äußeren Transportschnecke (20b) veränderbar ist, wodurch die Taschen (25) auf unterschiedliche Behältergrößen einstellbar sind.

8. Transportvorrichtung (10) nach einem der vorigen Ansprüche, **dadurch gekennzeichnet, dass** die Transportvorrichtung (10) mehrere übereinander angeordnete Transportschnecken (20, 20a, 20b) aufweist.

9. Vorrichtung (1) zum Behandeln von Behältern (100), vorzugsweise in einer Getränkeabfüllanlage, wobei die Vorrichtung (1) zumindest eine Transportvorrichtung (10) nach einem der vorigen Ansprüche aufweist.

10. Vorrichtung (1) nach Anspruch 9, **dadurch gekennzeichnet, dass** die Vorrichtung (1) einen Reinraum (50), vorzugsweise mit einer aseptischen Atmosphäre, und einen Außenraum (60) aufweist, wobei der Reinraum (50) und der Außenraum (60) über eine Reinraumgrenze (51) voneinander getrennt sind, wobei die Reinraumgrenze (51) einen Ausschnitt (52) aufweist und die Transportvorrichtung (10) eingerichtet ist, um die Behälter (100) durch den Ausschnitt (52) vom Reinraum (50) in den Außenraum (60) oder umgekehrt vom Außenraum (60) in den Reinraum (50) zu transportieren.
